# NOUVEAU FASCICULE DE BREVET EUROPEEN

(11) **EP 2 943 406 B2**
(45) Date de publication et mention de la décision concernant l'opposition: **22.01.2020**
(45) Mention de la délivrance du brevet: 08.03.2017
(21) Numéro de dépôt: 14703119.9
(22) Date de dépôt: 09.01.2014
(51) Int. Cl.: B64D 45/02, B64G 1/22, F02C 7/25, F02K 9/97, C09D 5/24

(54) **DISPOSITIF DE PROTECTION CONTRE LA FOUDRE ET SON PROCEDE DE REALISATION**
BLITZSCHUTZVORRICHTUNG UND VERFAHREN ZUR HERSTELLUNG DAVON
LIGHTNING PROTECTION DEVICE AND METHOD OF PRODUCING SAME

(30) Priorité: 10.01.2013 FR 1300041
(43) Date de publication de la demande: 18.11.2015
(73) Titulaire: Airbus Safran Launchers SAS, 75015 Paris (FR)
(72) Inventeur: SOULIGNAC, Thierry, 33290 Le Pian-Médoc (FR); BOMBLED, Florine, 33700 Mérignac (FR); SIERRA, Guillaume, 31450 Baziège (FR)
(74) Mandataire: Cabinet Beau de Loménie
(86) Numéro de dépôt international: PCT/FR2014/050031
(87) Numéro de publication internationale: WO 2014/108639

(56) Documents cités:
- EP-A2- 1 473 227
- WO-A1-2013/150241
- GB-A- 2 433 467
- US-A- 4 824 713
- US-A1- 2003 064 606
- US-A1- 2011 318 981

## Description

### Arrière-plan de l'invention

La présente invention se rapporte au domaine des protections contre la foudre destinées à être utilisées dans des environnements haute température. Un domaine particulier mais non exclusif de la présente invention est celui de la protection contre la foudre des parties chaudes présentes dans les propulseurs pour lanceurs spatiaux, tactiques, etc. ou dans les moteurs aéronautiques.

En effet, les propulseurs équipant ce type de lanceurs ou les pièces d'arrière-corps de moteurs aéronautiques sont susceptibles de se faire foudroyer durant le vol. Lorsque la ou les parties foudroyées sont en un matériau non conducteur tel qu'un matériau composite ou lorsque celles-ci sont recouvertes d'un matériau diélectrique, leur structure peut être gravement endommagée par les composantes impulsionnelles et continues de l'arc électrique créé par la foudre.

Il existe actuellement plusieurs techniques de protection contre la foudre dont les objectifs principaux sont de privilégier la circulation du courant de foudre dans la protection plutôt que dans la structure à protéger et d'augmenter rapidement la taille du pied d'arc de foudre de façon à réduire les contraintes thermiques et mécaniques.

Parmi les solutions existantes, on trouve des revêtements de protection contre la foudre qui sont constitués de :
- tissus métalliques fixés sur la surface de la pièce à protéger,
- grilles métalliques déployée à partir d'une feuille de métal munies de fentes et étirée pour former une grille également fixée sur la surface de la pièce à protéger,
- couches conductrices réalisées par dépôts de particules métalliques, par exemple des particules de nickel, sur la surface de la pièce à protéger afin d'augmenter la conductivité de cette dernière,
- fibres métalliques directement tissées dans la texture fibreuse du renfort de la pièce en matériau composite à protéger afin de former une multitude de petites pointes en surface de la pièce aptes à disperser le pied d'arc foudre.

Un dispositif de protection connu est décrit dans le document EP 1 473 227 A2.

Cependant, ces différents revêtements présentent certains inconvénients dont le principal est d'avoir une faible tenue en température. En outre, certains de ces revêtements sont difficiles à mettre en oeuvre sur des structures à géométrie complexe.

Ces solutions présentent également l'inconvénient d'être difficilement réparables.

### Objet et résumé de l'invention

La présente invention a, par conséquent, pour but de proposer une solution pour protéger contre la foudre des structures non conductrices ou recouvertes d'un diélectrique, et ce de façon fiable en environnement haute température.

A cet effet, l'invention propose un dispositif de protection contre la foudre destiné à être posé sur une structure à protéger et comprenant au moins :
- un premier revêtement comprenant au moins une couche de peinture conductrice,
- un deuxième revêtement disposé sur l'ensemble du premier revêtement et comprenant un matériau thermiquement isolant et électriquement conducteur.

On dispose ainsi d'une protection efficace contre l'agression foudre, en particulier en raison de l'utilisation d'une peinture conductrice capable d'évacuer rapidement une quantité importante de courant lors d'un foudroiement.

En outre, grâce à la présence d'un deuxième revêtement thermiquement isolant, l'intégrité du dispositif de protection de l'invention est préservée même lorsqu'il est utilisé sur des structures exposées à des flux thermiques importants. Le revêtement de protection étant également électriquement conducteur, il contribue à l'efficacité électrique globale du dispositif en assurant une continuité électrique entre la surface exposée du dispositif et la peinture conductrice.

Par ailleurs, de par sa conception, le dispositif peut s'adapter à tout type de géométries même complexes.

Selon un premier aspect du dispositif de l'invention, le deuxième revêtement présente une conductivité thermique inférieure à 0,1 W.m⁻¹.K⁻¹.

Selon un deuxième aspect du dispositif de l'invention, le deuxième revêtement présente une résistivité superficielle inférieure à 200 ohms.

L'invention concerne également une structure sensible à la foudre destinée à fonctionner dans des environnements haute température, caractérisée en ce qu'au moins une partie de ladite structure est munie d'un dispositif de protection contre la foudre selon l'invention. La structure correspond notamment à une tuyère, un arrière-corps ou une virole de propulseur.

L'invention a encore pour objet un procédé de réalisation d'un dispositif de protection contre la foudre sur une structure à protéger, ledit procédé comprenant au moins :
- le dépôt sur la structure à protéger d'un premier revêtement comprenant au moins une couche de peinture conductrice,
- le dépôt d'un deuxième revêtement sur l'ensemble du premier revêtement comprenant un matériau thermiquement isolant et électriquement conducteur.

Selon un premier aspect du procédé de l'invention, le deuxième revêtement présente une conductivité thermique inférieure à 0,1 W.m⁻¹.K⁻¹.

Selon un deuxième aspect du procédé de l'invention, le deuxième revêtement présente une résistivité superficielle inférieure à 200 ohms.

Le procédé de l'invention peut en outre être également utilisé avantageusement pour la réparation du revêtement selon l'invention, cette réparation étant alors particulièrement aisée.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est un organigramme des étapes d'un procédé de fabrication d'un dispositif de protection contre la foudre de l'invention illustré dans les figures 2A à 2E,
- les figures 2A à 2E sont des vues schématiques d'un procédé de fabrication d'un dispositif de protection contre la foudre conformément à un mode de réalisation de l'invention.

### Description détaillée de modes de réalisation

Le dispositif de protection contre la foudre de l'invention est de préférence, mais non exclusivement, destiné à être utilisé sur toute structure réalisée en un matériau non conducteur électrique ou recouverte sur sa ou ses surfaces à protéger d'un matériau ou couche d'isolation électrique, comme c'est le cas par exemple des revêtements de protection thermique utilisés sur les lanceurs, la structure étant en outre destinée à être utilisée dans des environnements haute température.

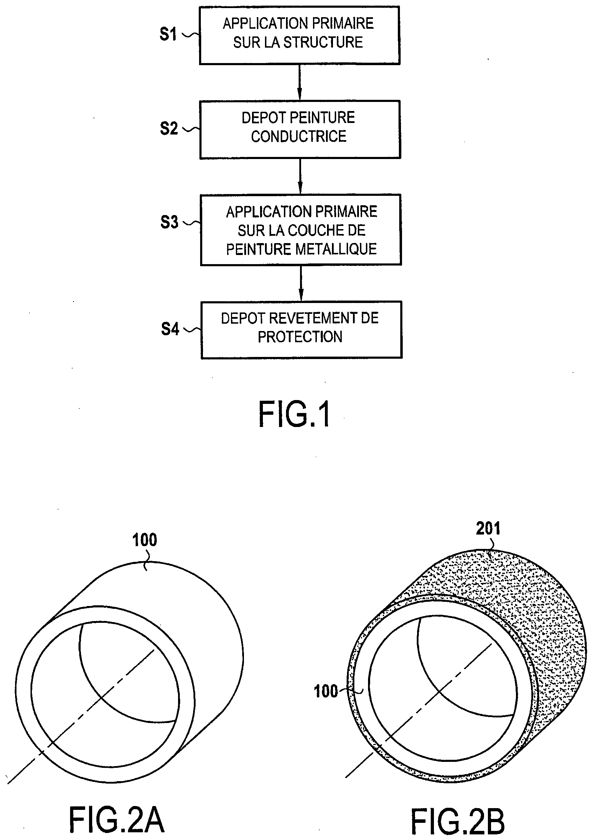

Un procédé de fabrication d'un dispositif de protection contre la foudre conforme à un mode de réalisation de l'invention est décrit en relation avec les figures 1 et 2A à 2E.

La figure 2A représente une pièce axisymétrique 100 correspondant à une structure à protéger contre la foudre. La pièce 100 peut être réalisée en un matériau composite thermostructural non conducteur électrique correspondant, par exemple, à un sous-ensemble de moteur-fusée ou de moteur aéronautique exposé aux fortes températures générées par les gaz chauds issus du moteur.

Par exemple, la pièce 100 est réalisée en matériau composite carbure de silicium/carbure de silicium (SiC/SiC) qui, de façon connue, est un matériau formé d'un renfort en fibres de SiC densifié par une matrice SiC. Les matériaux composites thermostructuraux, comme le matériau SiC/SiC, sont caractérisés par leurs propriétés mécaniques élevées qui les rendent aptes à constituer des pièces de structure et par leur capacité à conserver ces propriétés mécaniques à des températures élevées.

La pièce 100, dont la surface externe est constituée d'un matériau non conducteur électrique, est susceptible d'être foudroyée. En cas de foudroiement de la pièce ou de l'ensemble dans laquelle la pièce est intégrée, l'arc électrique ainsi formé peut conduire à la détérioration ou à la destruction de la pièce (effets directs ou indirects). Il en est de même pour les revêtements diélectriques présents à la surface de structures à protéger.

A cet effet et conformément à un mode de réalisation de l'invention, un dispositif de protection contre la foudre apte à résister aux températures élevées est formé sur la surface extérieure de la pièce 100 qui correspond ici à la partie de la pièce 100 à protéger contre la foudre.

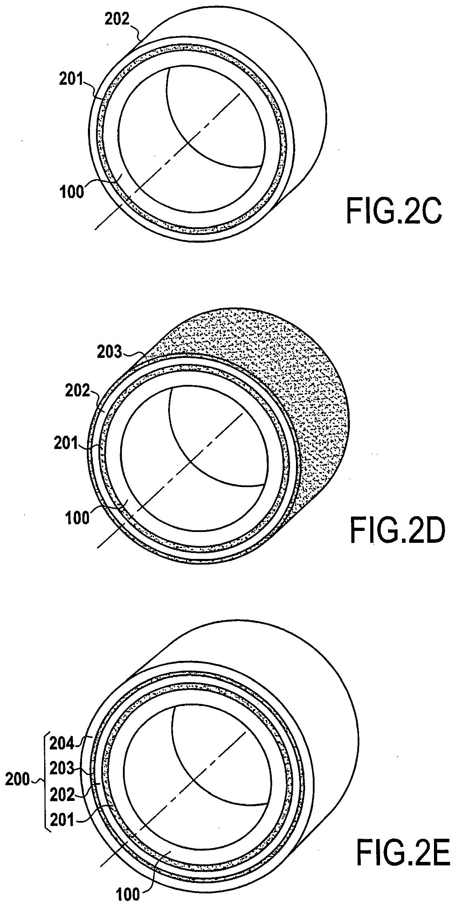

La réalisation du dispositif de protection débute par le dépôt d'une couche de peinture métallique ou électro-conductrice 202, appelée dans la suite du texte « peinture conductrice », sur la surface extérieure de la pièce 100 à protéger (étape S2, figure 2C). Dans l'exemple décrit ici, une couche d'un primaire 201, par exemple un primaire d'adhérence de type silane/éthanol, est préalablement déposée sur la surface de la pièce 100 afin de favoriser l'adhésion de la peinture conductrice (étape S1, figure 2B). Toutefois, lorsque la pièce à protéger présente un état de surface compatible avec l'accrochage d'une peinture métallique, le dépôt préalable d'un primaire n'est pas nécessaire et la peinture conductrice peut être directement déposée sur la surface de la pièce.

La peinture conductrice, et le primaire éventuel, peuvent être déposés par pulvérisation pneumatique ou par dépose manuelle. La peinture conductrice peut être constituée d'une résine acrylique dans laquelle ont été incorporés des pigments à base de particules métalliques, comme, par exemple, des particules d'argent, d'aluminium, de cuivre, etc., la peinture pouvant être éventuellement diluée dans des solvants cétoniques avant application. Une telle composition de peinture est notamment présente dans le produit MAPELEC® SSS-47 ou MAPELEC® SSS-02 (résine acrylique, pigment argent et mélanges de solvants cétoniques) commercialisé par la société MAP.

En outre, plusieurs couches de peinture conductrice peuvent être déposées consécutivement afin d'obtenir l'épaisseur de couche désirée et, par conséquent, la valeur de conductivité surfacique visée.

La réalisation du dispositif de protection se poursuit par le dépôt d'un revêtement de protection 204 sur la couche de peinture conductrice 202 (étape S4, figure 2E). Le revêtement de protection 204 est à la fois thermiquement isolant pour protéger la peinture conductrice des flux thermiques environnants et électriquement conducteur pour favoriser la conduction électrique avec la peinture. Le revêtement de protection 205 présente de préférence une conductivité thermique inférieure à 0,1 W.m⁻¹.K⁻¹ et une résistivité superficielle (ou encore appelée résistivité de surface) inférieure à 200 ohms (ou 200 ohms par carré). Il peut être déposé en plusieurs couches successives afin d'obtenir l'épaisseur désirée et, par conséquent, la conductivité surfacique visée. Le revêtement de protection 205 peut être notamment réalisé à partir d'une résine silicone chargée de particules électro-conductrices comme des particules d'argent ou d'un mélange de polymères silicones fonctionnalisés, d'une charge conductrice (QS 1123 Elec LD) et de solvant cétoniques.

Dans l'exemple décrit ici, une couche d'un primaire 203, par exemple un primaire époxy chargé de particules électro-conductrices ou un primaire constitué d'un mélange de silanes fonctionnalisés et d'éthanol disponible sous la référence MAPSIL® P255 de la société MAP, est préalablement déposée sur la couche de peinture conductrice 202 afin de favoriser l'adhésion du revêtement de protection 204 (étape S3, figure 2D).

Tel que représenté sur la figure 2E, on obtient alors, à la surface 100a de la pièce 100, un dispositif de protection 200 comprenant :
- un premier revêtement constitué ici d'un premier primaire 201, d'une couche de peinture métallique 202 et d'un deuxième primaire 203, et
- un deuxième revêtement 205 protégeant le premier revêtement des flux thermiques environnants.

L'épaisseur de la couche conductrice peut être comprise entre 30 µm et 60 µm tandis que le ou les primaires peuvent avoir chacun une épaisseur de 1 mm environ. Le deuxième revêtement protégeant le premier revêtement des flux thermiques environnants peut avoir une épaisseur comprise entre 1 mm et 5 mm.

## Revendications

1. Dispositif de protection contre la foudre (200) destiné à être posé sur une structure (100) à protéger, ledit dispositif comprenant au moins :
- un premier revêtement comprenant au moins une couche de peinture conductrice (202),
- un deuxième revêtement (204) disposé sur l'ensemble du premier revêtement de surface et comprenant un matériau thermiquement isolant et électriquement conducteur.

2. Dispositif selon la revendication 1, **caractérisé en ce que** le deuxième revêtement (204) présente une conductivité thermique inférieure à 0,1 W.m⁻¹.K⁻¹.

3. Dispositif selon la revendication 2, **caractérisé en ce que** le deuxième revêtement (204) présente une résistivité superficielle inférieure à 200 ohms.

4. Structure (100) sensible à la foudre destinée à fonctionner dans des environnements haute température, **caractérisée en ce qu'**au moins une partie de ladite structure est munie d'un dispositif de protection contre la foudre (200) selon l'une quelconque des revendications 1 à 3.

5. Structure selon la revendication 4 **caractérisée en ce qu'**elle constitue au moins un des éléments de propulseur suivants : une tuyère, un arrière-corps et une virole.

6. Procédé de réalisation d'un dispositif de protection contre la foudre (200) sur une structure à protéger (100), ledit procédé comprenant au moins :
- le dépôt sur la structure à protéger d'un premier revêtement comprenant au moins une couche de peinture conductrice (202),
- le dépôt d'un deuxième revêtement (204) sur l'ensemble du premier revêtement comprenant un matériau thermiquement isolant et électriquement conducteur.

7. Procédé selon la revendication 6, **caractérisé en ce que** le deuxième revêtement (204) présente une conductivité thermique inférieure à 0,1 W.m⁻¹.K⁻¹.

8. Procédé selon la revendication 6 ou 7, **caractérisé en ce que** le deuxième revêtement (204) présente une résistivité superficielle inférieure à 200 ohms.

## Patentansprüche

1. Blitzschutzvorrichtung (200), die dazu bestimmt ist, auf eine zu schützende Struktur (100) aufgesetzt zu werden, wobei die Vorrichtung wenigstens umfasst:
- eine erste Beschichtung, die wenigstens eine leitende Farbschicht (202) umfasst,
- eine zweite Beschichtung (204), die auf der gesamten ersten Oberflächenbeschichtung angeordnet ist und ein wärmedämmendes und elektrisch leitendes Material umfasst.

2. Vorrichtung nach Anspruch 1, **dadurch gekennzeichnet, dass** die zweite Beschichtung (204) eine Wärmeleitfähigkeit von weniger als 0,1 W.m⁻¹.K⁻¹ aufweist.

3. Vorrichtung nach Anspruch 2, **dadurch gekennzeichnet, dass** die zweite Beschichtung (204) einen spezifischen Oberflächenwiderstand von weniger als 200 Ohm aufweist.

4. Blitzempfindliche Struktur (100), welche dazu bestimmt ist, in Hochtemperaturumgebungen zu arbeiten, **dadurch gekennzeichnet, dass** wenigstens ein Teil der Struktur mit einer Blitzschutzvorrichtung (200) nach einem der Ansprüche 1 bis 3 ausgestattet ist.

5. Struktur nach Anspruch 4, **dadurch gekennzeichnet, dass** sie wenigstens eines der folgenden Triebwerkselemente bildet: eine Düse, einen Heckteil und einen Ring.

6. Verfahren zur Herstellung einer Blitzschutzvorrichtung (200) auf einer zu schützenden Struktur (100), wobei das Verfahren wenigstens umfasst:
- das Abscheiden einer ersten Beschichtung, die wenigstens eine leitende Farbschicht (202) umfasst, auf der zu schützenden Struktur,
- das Abscheiden einer zweiten Beschichtung (204), die ein wärmedämmendes und elektrisch leitendes Material umfasst, auf der gesamten ersten Beschichtung.

7. Verfahren nach Anspruch 6, **dadurch gekennzeichnet, dass** die zweite Beschichtung (204) eine Wärmeleitfähigkeit von weniger als 0,1 W.m⁻¹.K⁻¹ aufweist.

8. Verfahren nach Anspruch 6 oder 7, **dadurch gekennzeichnet, dass** die zweite Beschichtung (204) einen spezifischen Oberflächenwiderstand von weniger als 200 Ohm aufweist.

## Claims

1. A lightning protection device (200) for placing on a structure (100) for protecting, said device comprising at least:
• a first coating comprising at least one layer of conductive paint (202); and
• a second coating (204) deposited over the whole first surface coating and comprising a material that is thermally insulating and electrically conductive.

2. A device according to claim 1, **characterized in that** the second coating (204) presents thermal conductivity of less than 0.1 Wm⁻¹K⁻¹.

3. A device according to claim 2, **characterized in that** the second coating (204) presents surface resistivity of less than 200 ohms.

4. A lightning-sensitive structure (100) that is to operate in high temperature environments, said structure being **characterized in that** at least a portion thereof is provided with a lightning protection device (200) according to any one of claims 1 to 3.

5. A structure according to claim 4, **characterized in that** it constitutes at least one of the following thruster elements: a nozzle; an afterbody; and a shroud.

6. A method of making a lightning protection device (200) on a structure (100) for protecting, said method comprising at least:
• depositing on the structure for protecting a first coating comprising at least one layer of conductive paint (202);
• depositing a second coating (204) over the whole first coating, the second coating comprising a material that is thermally insulating and electrically conductive.

7. A device according to claim 6, **characterized in that** the second coating (204) presents thermal conductivity of less than 0.1 Wm⁻¹K⁻¹.

8. A device according to claim 6 or claim 7, **characterized in that** the second coating (204) presents surface resistivity of less than 200 ohms.
